# EUROPEAN PATENT SPECIFICATION

(11) **EP 1 818 605 B1**
(45) Date of publication and mention of the grant of the patent: **27.10.2010**
(21) Application number: 07380028.6
(22) Date of filing: 09.02.2007
(51) Int. Cl.: F21S 9/03, F21W 111/00

(54) **Light signaling post**
Leuchtsignalsäule
Poteau de signalisation lumineuse

(30) Priority: 10.02.2006 ES 200600292 U
(43) Date of publication of application: 15.08.2007
(73) Proprietor: Nova Corbyn, S.A., 08150 Parents del Valles (Barcelona) (ES)
(72) Inventor: Corbero Forn, Pere, 08150 Parets del Valles (Barcelona) (ES)
(74) Representative: Carpintero Lopez, Francisco

(56) References cited:
- EP-A- 0 449 219
- DE-U1- 20 321 064
- FR-A- 2 557 369
- GB-A- 2 315 123
- GB-A- 2 408 395
- US-A1- 2006 028 166
- US-B1- 6 183 100

## Description

### OBJECT OF THE INVENTION

The invention relates to a beacon or light signaling post, of the type used for signaling, for example, in ski slopes, aquatic environments (anchored ships, port signaling, etc.), highways, mountain roads, job sites, gardens, etc., or to be used as emergency lights in buildings or the like. It is basically a beacon comprising light elements and control and feed circuits of the light elements, as will be explained in greater detail below.

### STATE OF THE ART

Light signaling posts comprising light generating means, a power circuit for the light generating means (and including batteries or the like to provide electric energy to the light generating means), as well as one or several photovoltaic elements to provide electric energy to the light generating means and/or to the batteries, to charge the batteries. They are generally rigid photovoltaic elements which are normally placed on top of the post or on the sides thereof, but which generally cannot be used to receive light from all directions.

GB-A-2 408 395 discloses a street light substantially comprising the features of the preamble of claim 1.

### DESCRIPTION OF THE INVENTION

The invention relates to a light signaling post as defined in claim 1, including:
a body (for example, with a tubular or circular cylindrical shape) with a first end (which can be the lower end when the post is being used) and a second end (which can be the upper end when the post is being used);
light generating means associated to said body (for example, to the upper part of the body);
at least one power circuit for the light generating means, the power circuit including at least one electric energy accumulating device (for example, made up of one or more batteries) to provide electric energy to the light generating means; and
at least one photovoltaic element associated to the power circuit, to provide electric energy to the light generating means and/or to said at least one electric energy accumulating device, to charge the electric energy accumulating device or devices.

According to the invention, the photovoltaic element comprises a flexible solar panel (for example, an amorphous solar panel) located in a position between the first end and the second end of the body, extending around said body throughout an angle α of a cross-section of said body, α≥200°, for example, α≥270°, or even α≥330° or α=360°. In other words, the flexible solar panel extends throughout the circumference of the body of the post, according to said angle α. A larger angle represents better capacity to receive light from all directions. Furthermore, in the case of a vertical post, this configuration favors the gathering of light reflected against the ground, which is an important power source in, for example, snowy environments or marine environments.

Using flexible solar panels (especially if they are amorphous; in this context, the term amorphous relates to the structure of the silicon atoms: the arrangement is short-range and the material lacks crystalline structure, providing it with flexibility) allows introducing flexibility, autonomy and control to the system. The amorphous panels are completely flexible, therefore they can be easily adaptable to any shape or geometry. This allows placing the solar panel in a vertical position around a cylinder, spanning the 360 degrees of its circumference, causing an increased autonomy for many applications. In many of the applications discussed above the (ski slopes, a marine environment, dense fog situations ...) there is a light (energy) component that does not come directly from the sun. The reflections of sunlight in the snow, water or fog have a considerable energetic component. By placing the solar panel in the vertical position, not only does it gather the energy coming directly from the sun but it also gathers the energy reaching it indirectly. The placement and geometric arrangement of the solar panel make the device very versatile and lightweight, which is very important for applications such as highways and ports where the systems which are currently used are very bulky.

The power circuit further comprises a charging sub-system to charge the electric energy accumulating device, connected to the photovoltaic element and to the electric energy accumulating device. This charging sub-system comprises a voltage regulator, thereby being able to adjust the charging voltage (at the expense of the current, i.e. sacrificing the charging current to increase the charging voltage, for example, beyond the voltage provided by the solar panel, until reaching the minimum voltage to be able to charge the electric energy accumulating device) such that the electric energy accumulating device can be charged even in unfavorable atmospheric conditions in terms of receiving sunlight in the solar panel.

The light generating means may comprise a plurality of light emitting diodes (LEDs), which have been proven useful in this type of applications. The light generating means may be located at one end of the body where a substantially cone-shaped reflecting device (for example, a chrome-plated cone) is located. The light emitting diodes may be located such that they surround the reflecting device, such that the reflecting device reflects light emitted by the light emitting diodes outwardly in relation to the longitudinal axis of the body.

The light generating means are located at one end of the body, covered by a translucent cover closing the end of the body and which may be configured to act as a lens to suitably direct the light.

The body comprises a casing (for example, made of plastic, for example, of a polycarbonate compound with different additives so as to provide the system with sturdiness against the elements) which has at least one translucent part, the photovoltaic element being located inside the casing. The casing may be made leak-tight.

The power circuit comprises a programmable control unit which may be associated to radio frequency communication means, to allow the remote control of the working of the post and/or a remote reprogramming of the control unit. Radio frequency may be used for the working and it allows making the post completely leak-tight. The use of radio frequency communication for control of the working allows:
- controlling turning the device on when the user wants;
- increasing the light intensity when visibility conditions deteriorate;
- controlling the working cycle of the light intensity (flashing of the light emitting diodes);
- monitoring the state of the batteries to known the time that the device may be working under certain conditions (luminous intensity, flashing);
- etc.

The leak-tightness may be an indispensable requirement for certain applications (marine environment, lighting for swimming pools, ski slopes, etc.). The use of radio frequency for the control allows completely isolating the internal circuitry, providing lighting in those places where wiring is impossible or where it has a very high cost of implementing.

The device may incorporate an EEPROM memory which could be used, for example, to monitor the device.

The programmable control unit is connected to receive a signal from the photovoltaic element and to adjust the light emission from the light generating means according to said signal. The photovoltaic solar panel then works not only as a power source but also as a light sensor and is useful for optimizing and controlling the system. For road signaling applications (e.g. highways, mountains) automobile headlights can be used as the actuator of a protocol for turning on the device successively. This application has a very positive environmental impact since maximum consumption exists only when the automobile passes by; it can further achieve less light pollution, which is beginning to be taken into consideration in a number of environmental laws.

Another form of control by means of the solar panel is based on the detection of the change from night to day and/or vice versa. In applications in which the system only has to work during the night, it is possible to use the solar panel to detect when the light has disappeared.

Another way of using the solar panel as the basis for control corresponds to the way of increasing or decreasing the emitted light intensity according to the environmental light, regulating and maximally optimizing consumption of the system. One of the problems occurring in signally in fog conditions during the day is light emission. Fog acts as a diffuser and in order for the signaling to be seen by users, the emitted light must be very powerful, increasing energy consumption. The solar panel may be used as an outdoor light detector to regulate the emitted light intensity. The more outdoor light there is, the more light will be emitted, for example.

The voltage regulator is configured such that when the voltage on the side of the photovoltaic element is less than a minimum voltage level to charge the electric energy accumulating device (i.e. the batteries or the like), the voltage regulator increases said voltage until it reaches a level that is equal to or greater than said minimum level. The batteries or other type of electric energy accumulating device can thus be charged, even in conditions in which the solar panel does not produce a voltage with sufficient level (i.e. the voltage is increased as the expense of the current).

### DESCRIPTION OF THE DRAWINGS

To complement the description being made and for the purpose of aiding to better understand the features of the invention according to a preferred practical embodiment thereof, a set of drawings is attached as an integral part of said description which shows the following with an illustrative and non-limiting manner:
Figure 1 shows an exploded view of the A post according to a preferred embodiment of the invention.
Figures 2 and 3 show longitudinal section perspective views of the body of the post, according to said embodiment of the invention.
Figure 4 is a block diagram of the power and control circuit of the invention according to said preferred embodiment of the invention.
Figure 5 is a block diagram of the charging sub-system according to said preferred embodiment of the invention.
Figure 6 is a perspective view of the post according to a preferred embodiment of the invention, where the post further includes a support comprising an elongated element and a system of fixing the post to said elongated element.

### PREFERRED EMBODIMENT OF THE INVENTION

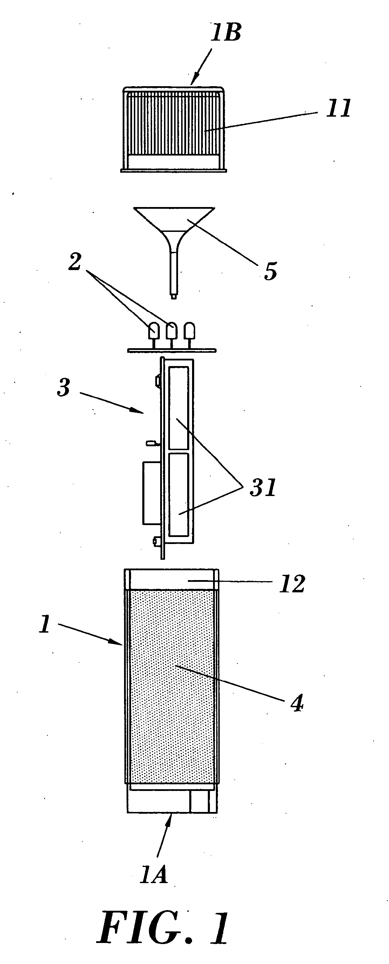

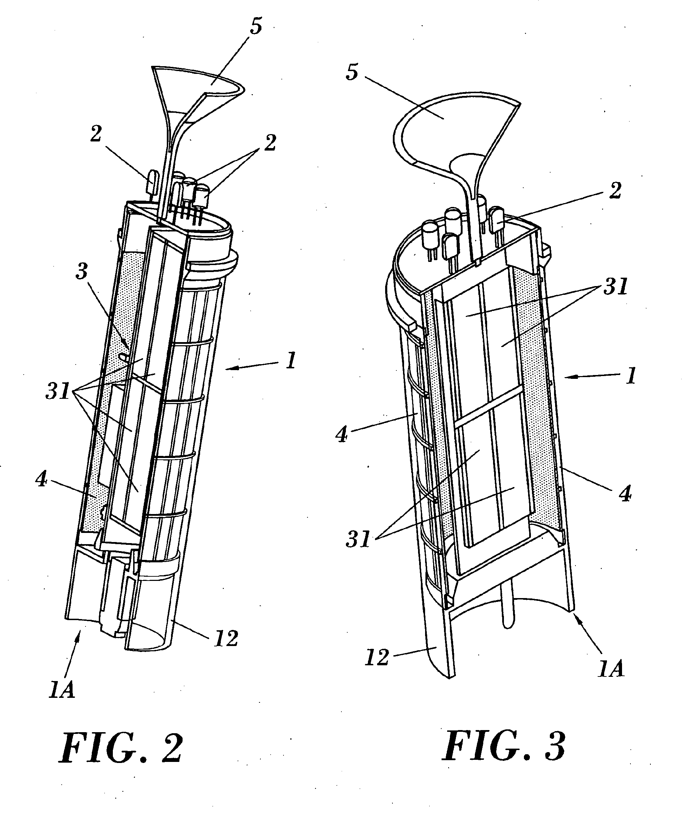

Figures 1-3 show how the post, according to a preferred embodiment of the invention, comprises a body 1 with a first end 1A (the lower end) and a second end 1B (the upper end), as well as a main transparent or translucent plastic casing 12. The casing 12 has a circular cylindrical or tubular shape, with the two ends closed. The second end 1B, i.e. the upper end in the figures, is closed with a translucent cover 11 forming a lens for the light emitted by light generating means 2 comprising a plurality of light emitting diodes (LEDs). The second end of the body also houses a chrome-plated cone 5 surrounded by the light emitting diodes such that the outer surface of said chrome-plated cone reflects the light towards the wall of the cover, through which the light passes to the outside, duly focused by the lens structure of the cover 11. The chrome-plated cone 5 optimizes the direction of the light emitted by the diodes, and the lens of the cover 11 is responsible for somewhat diffusing the point light provided by the diodes. The first end 1A may be completely closed in any conventional manner, for example it may be a body with this first end directly closed by the body structure itself, or closed by means of a cover or the like, such that the entire assembly is completely leak-tight.

Housed inside the casing 12 there is at least one photovoltaic element comprising a flexible and amorphous solar panel, which allows said plate to be arranged inside the casing, extending around the body in the inner part of the casing, according to an 360° angle in the cross-section of the body. This allows the solar panel to gather light from all directions and also light reflected by the ground when the post is located perpendicular in relation to the ground.

Figure 1 further schematically illustrates a power circuit 3 comprising a plurality of batteries 31 arranged to feed the diodes 2 and to be charged by the photovoltaic element 4.

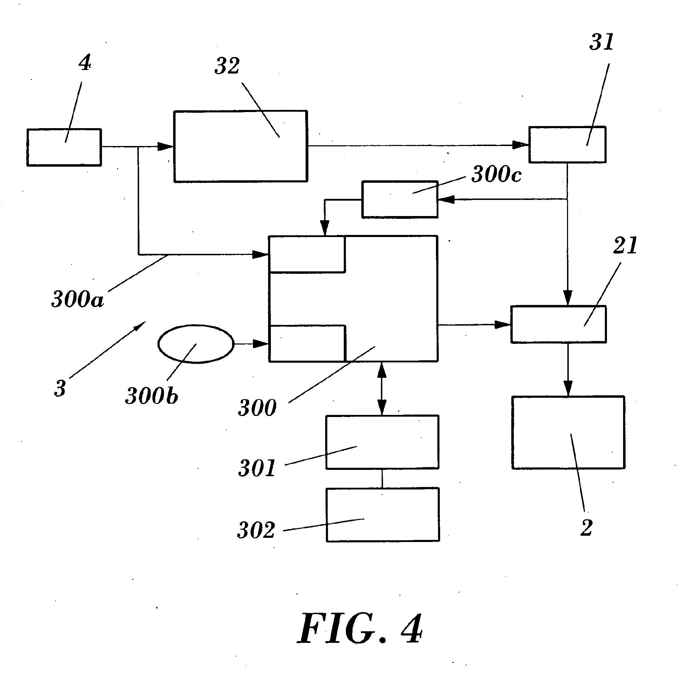

Figure 4 is a block diagram showing the main elements of the power circuit 3 which is used to feed the diodes 2 from the batteries 31, which batteries are charged from the photovoltaic element 2. The power circuit comprises a programmable control unit 300 which can be programmed and controlled by radio frequency through a radio frequency communication unit 302, which the control unit is connected to through the corresponding interface 301. The control unit 300 receives a signal indicating the luminosity 300a from the photovoltaic element, which therefore is useful as a luminosity detector. The control unit 300 is further provided with an oscillator 300b and connected to a battery monitor 300c providing information about the charge level of the batteries. An output of the control unit 300 is connected to a module 21 controlling the light emitting diodes through which the control unit can control the working of the diodes, for example, to regulate their working according to, for example, the time and/or the detected luminosity (input signal 300a), according to a preprogrammed program and/or according to instructions received by radio frequency.

The circuit additionally includes a charging sub-system 32 which is described in further detail below, and is essentially responsible for converting the electric energy provided by the photovoltaic element 4 into useful charging power for charging the batteries (4 cells connected in series, for example, of 1.5 V maximum each can be used as batteries). These batteries are the power sources for the control unit and for the light emitting diodes, such that the diodes can work and emit light even when there is not enough available sunlight for that purpose.

The control unit 300 is the brain of the post, controlling its operation and its working, which may vary according to different modes of the system: fog, nighttime,...

To carry out this task, the control unit has two information inputs:
- The luminosity, obtained from the voltage (signal 300a) provided by the photovoltaic element and which allows the system to distinguish between lightness and darkness (day and night) and even to know the amount of environmental day luminosity (direct and indirect sunlight, cloudiness, etc.).
- The state of the batteries, obtained from the battery monitor 300c, a system providing a voltage equivalent to the state of charge of the batteries and allowing the control unit to decide when the charge level of the batteries is too low for the batteries to continue working. When such condition is detected, the system may turn off the light emission by the diodes until the batteries have been charged to a minimum level so as to ensure the proper working.

In the same manner, in order to work properly, the control unit has a clock obtained from the crystal oscillator 300b, which allows it to control the time, for example, to determine when the light emitting diodes must be activated according to the preprogrammed lighting times.

According to a possible embodiment of the invention, the lighting means may comprise a light emitting diode (LEDs) panel and the diodes are controlled separately and in pairs, thus allowing great flexibility since the control unit may activate at will 2, 4, 6, 8 etc. diodes, or it may independently activate any of the pairs of diodes arranged in the panel. To control this the control unit may use the diode controlling module 21, which is responsible for carrying the exact electric current that the diodes need, meaning that the control unit decides the current that will be transferred from the batteries 31 to the diodes 2.

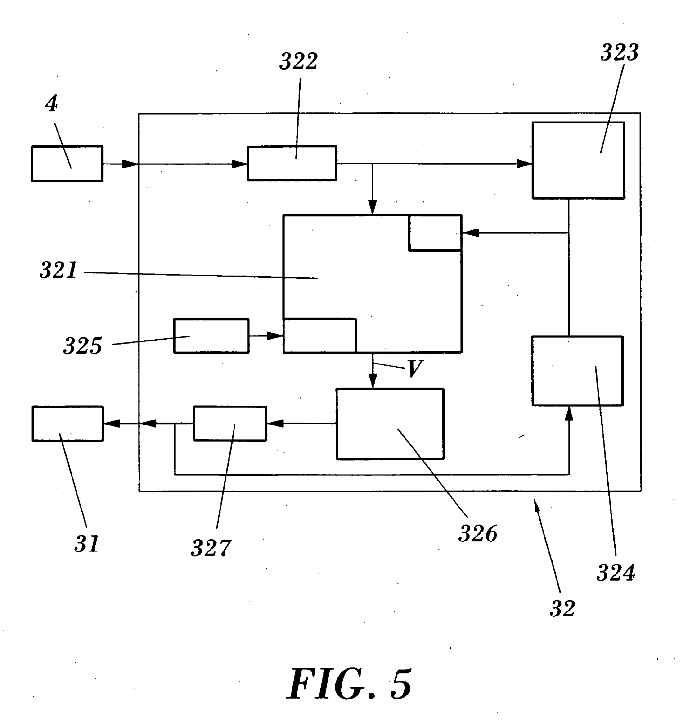

The charging sub-system 32 is additionally configured to convert the energy provided by the photovoltaic element 4 into useful power for charging the batteries 31, seeking the optimization of the energy efficiency taking into consideration the cases of programmed use and settings. This sub-system is connected, as shown in Figures 4 and 5, between the photovoltaic element 4 and the batteries 31. As shown in Figure 5, the charging sub-system 32 comprises an energy accumulator 322, a minimum charge energy tester 323, an end-of-charge tester 324, operatively associated as shown in Figure 5. This sub-system further comprises a voltage regulator 321 with an input 325 indicating the minimum charging voltage level, which can be preset according to the type of batteries to be used. The voltage regulator is responsible for providing this voltage, through a charging voltage stabilizing module 326 and a current limiter 327.

The solar energy that is transformed into solar-based electric energy by means of the photovoltaic element 4 is characterized by its irregularity both in relation to voltage and current generated in the photovoltaic element. For this reason the heart of the battery charging system using solar energy is the voltage regulator 321, since even though the batteries tolerate an irregular electric current when being charged (though it is not the best situation for prolonging the life of the batteries), it is not possible to charge them with a variable voltage, especially if said voltage is under the rated voltage of the batteries. Therefore the voltage regulator 321 increases the electric voltage (to the detriment of the current) up to the minimum level necessary for charging (in a typical case, this minimum level may be in the order of 8V), and tries to maintain this level constantly, the batteries being charged whenever possible.

The charging regulator 321 may be switch-type, which can be especially efficient from an energy point of view (considering the delivered energy capacity divided by the consumed energy capacity), around 85%. Nevertheless, these regulators have the drawback of needing enough initial energy to start working. For this reason the energy accumulator 322 and the input energy supervising system 323, which keeps the voltage regulator 321 turned off until the available energy is not enough to begin the entire regulation process, are used.

When this energy level is reached, regulation is started up providing an output with a voltage with the necessary level (for example, 8V) constant, and with a variable current according to the solar energy being gathered at any time. Once this type of regulator is started, it is able to withstand voltage drops (caused, for example, by the passing of a cloud in front of the sun) up to 1V. From this voltage, the regulator may turn off again while waiting for enough energy to begin regulating again.

As can be seen, the output voltage may be variable. However, it can be set at a fixed level, for example at 8V, which allows simpler working of the regulator, which can maintain a high enough output voltage to always be above the rated voltage of the batteries (which can be, for example, 6V in the case of four 1.5 V cells in series). The fixed output voltage of the voltage regulator 321 may be stabilized and filtered so as to not introduce noise or spuriousness of the internal switching of the regulator into the system feed.

The voltage difference between the output voltage of the voltage regulator (for example, 8V) and the rated voltage of the batteries (for example, 6V) allows placing the current limiter 327 between the output of the voltage regulator 321 and the batteries 31, and even though such element deteriorates the overall efficiency of the charging system, it may appropriate given that batteries are components with no limitation requiring as much energy as the regulator can give them, whereas if more energy is required of the regulator than what it can give, it may become saturated stop working properly.

Finally, the system has the end of charge tester 324 which is useful for turning off the regulator when the batteries are fully charged (because if they continue to charge they may become damaged) and for turning on the voltage regulator again when the batteries are somewhat uncharged.

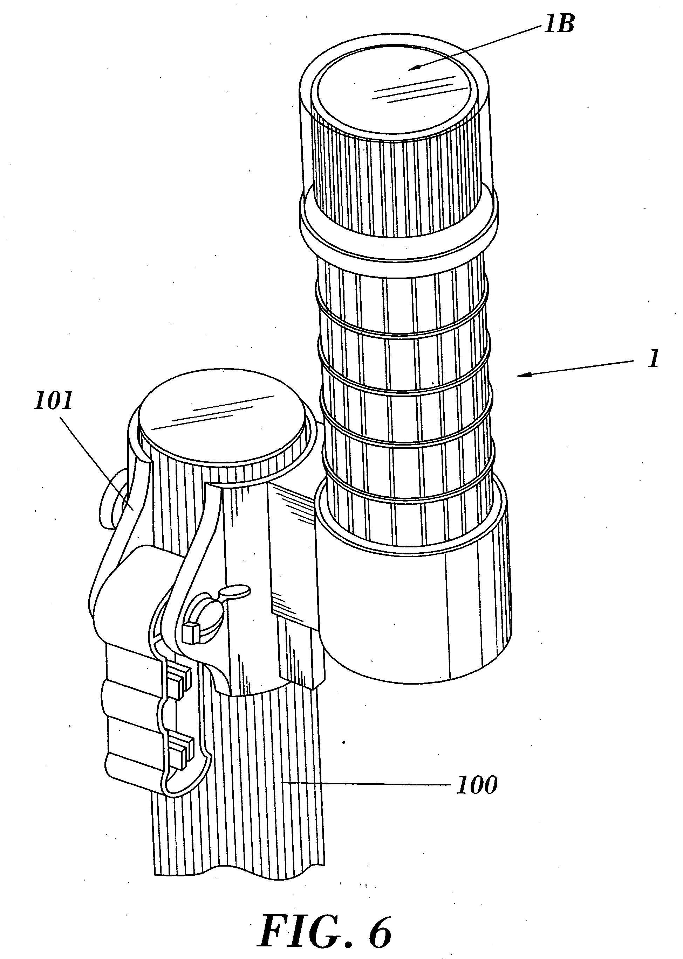

Figure 6 shows the post of the invention located on a support which can be another post 100, which post 1 is attached to by means of a coupling system 101 holding the lower part of the post.

In this text, the word "comprises" and its variants (such as "comprising", etc.) must not be interpreted in an excluding manner, i.e. they do not exclude the possibility that what is described may include other elements, steps, etc.

In addition, the invention is not limited to the specific embodiments which have been described but rather it also includes, for example, the variants that may be carried out by the person with average skills in the art (for example, in terms of the choice of materials, sizes, components, configuration, etc.), comprised within the claims.

## Claims

1. A light signaling post, comprising :
a body (1) with a first end (1A) and a second end (1B);
light generating means (2) associated to said body;
at least one power circuit (3) for said light generating means, the power circuit including at least one electric energy accumulating device (31) to provide electric energy to said light generating means;
at least one photovoltaic element (4) associated to said power circuit (3), to provide electric energy to said, at least one, electric energy accumulating device, to charge said electric energy accumulating device;
wherein
the photovoltaic element (4) comprises a solar panel located in a position between the first end (1A) and the second end (1B) of the body (1), said solar panel extending around said body throughout an angle α of a cross-section of said body, α≥200°;
and wherein
the power circuit comprises a charging sub-system (32) to charge the electric energy accumulating device (31), said charging sub-system (32) being connected to the photovoltaic element (4) and to the electric energy accumulating device (31),
and
the light generating means (2) are located at one end (1B) of the body, and they are covered by a translucent cover (11) closing said end (1B) of the body;
**characterized in that**
said solar panel is a flexible solar panel;
and **in that**
said charging sub-system (32) comprises a voltage regulator (321);
and **in that**
the body comprises a casing (12) having at least one translucent part, the photovoltaic element (4) being located inside said casing (12);
and **in that**
the power circuit comprises a programmable control unit (300);
and **in that**
the programmable control unit (300) is connected to receive a signal (300a) from the photovoltaic element (4) and configured to adjust the light emission from the light generating means (2) according to said signal (300a);
and **in that**
the voltage regulator (321) is configured such that when the voltage on the side of the photovoltaic element (4) is less than the minimum voltage level to charge the electric energy accumulating device (31),
the voltage regulator (321) increases said voltage until it reaches the same level of said minimum level or greater.

2. A post according to claim 1, **characterized in that** α≥270°.

3. A post according to claim 2, **characterized in that** α≥330°.

4. A post according to claim 3, **characterized in that** α=360°.

5. A post according to claim 4, **characterized in that** the light generating means (2) comprise a plurality of light emitting diodes.

6. A post according to claim 5, **characterized in that** the light generating means (2) are located at one end (1B) of the body, said end further comprising a substantially cone-shaped reflecting device (5), the light emitting diodes being located such that they surround said reflecting device, such that said reflecting device reflects light emitted by the light emitting diodes outwardly in relation to the longitudinal axis of the body (1).

7. A post according to claim 6, **characterized in that** said reflecting device (5) comprises a chrome-plated cone.

8. A post according to any of the previous claims, **characterized in that** said casing (12) is made of plastic.

9. A post according to any of the previous claims, **characterized in that** the body has a tubular shape.

10. A post according to any of the previous claims, **characterized in that** the programmable control unit is associated to radio frequency communication means (302), to allow the remote control of the working of the post and/or a remote reprogramming of the control unit (300).

11. A post according to any of the previous claims, **characterized in that** the photovoltaic element (4) is an amorphous solar panel.

12. A post according to any of the previous claims, arranged vertically.

13. A post according to any of the preceding claims, **characterized in that** the casing is leak-tight.

## Patentansprüche

1. Leuchtsignalsäule, mit:
einem Körper (1) mit einem ersten Ende (1A) und einem zweiten Ende (1B);
mit dem Körper verbundenen Lichterzeugungsvorrichtungen (2);
mindestens einem Stromkreis (3) für die Lichterzeugungsvorrichtungen, wobei der Stromkreis mindestens eine elektrische Energieakkumulationsvorrichtung (31) enthält, um die Lichterzeugungsvorrichtungen mit elektrischer Energie zu versorgen;
mindestens einem mit dem Stromkreis (3) verbundenen photovoltaischen Element (4) zur Zufuhr elektrischer Energie zu der mindestens einen elektrischen Energieakkumulationsvorrichtung, um die elektrische Energieakkumulationsvorrichtung zu laden;
wobei
das photovoltaische Element (4) einen Sonnenkollektor aufweist, der in einer Position zwischen dem ersten Ende (1A) und dem zweiten Ende (1B) des Körpers (1) angeordnet ist, wobei der Sonnenkollektor sich entlang eines Querschnittbereichswinkels α des Körpers um den Körper erstreckt, wobei α ≥ 200°;
und wobei
der Stromkreis ein Lade-Subsystem (32) zum Laden der elektrischen Energieakkumulationsvorrichtung (31) aufweist, wobei das Lade-Subsystem (32) mit dem photovoltaischen Element (4) und mit der elektrischen Energieakkumulationsvorrichtung (31) verbunden ist,
und
die Lichterzeugungsvorrichtungen (2) an einem Ende (1B) des Körpers angeordnet und von einer das Ende (1B) des Körpers schließenden durchscheinenden Abdeckung (11) bedeckt sind,
**dadurch gekennzeichnet, dass**
der Sonnenkollektor eine flexible Sonnenkollektorplatte ist;
und dass
das Lade-Subsystem (32) einen Spannungsregulator (321) aufweist;
und dass
der Körper ein Gehäuse (12) mit mindestens einem durchscheinenden Teil aufweist, wobei das photovoltaische Element (4) in dem Gehäuse (12) angeordnet ist;
und dass
der Stromkreis eine programmierbare Steuereinheit (300) aufweist;
und dass die programmierbare Steuereinheit (300) derart angeschlossen ist, dass sie ein Signal (300a) von dem photovoltaischen Element (4) empfängt, und derart konfiguriert ist, dass sie die Lichtemission aus den Lichterzeugungsvorrichtungen (2) entsprechend dem Signal (300a) anpasst;
und dass
der Spannungsregulator (321) derart konfiguriert ist, dass, wenn die Spannung auf der Seite des photovoltaischen Elements (4) niedriger als der Mindestspannungspegel zum Laden der elektrischen Energieakkumulationsvorrichtung (31) ist, der Spannungsregulator (321) die Spannung erhöht, bis sie den gleichen Pegel wie den Mindestpegel oder einen höheren Pegel erreicht.

2. Säule nach Anspruch 1, **dadurch gekennzeichnet, dass** α ≥ 270°.

3. Säule nach Anspruch 2, **dadurch gekennzeichnet, dass** α ≥ 330°.

4. Säule nach Anspruch 3, **dadurch gekennzeichnet, dass** α = 360°.

5. Säule nach Anspruch 4, **dadurch gekennzeichnet, dass** die Lichterzeugungsvorrichtungen (2) mehrere lichtemittierende Dioden aufweisen.

6. Säule nach Anspruch 5, **dadurch gekennzeichnet, dass** die Lichterzeugungsvorrichtungen (2) an einem Ende (1B) des Körpers angeordnet sind, wobei dieses Ende ferner eine im Wesentlichen kegelförmige Reflexionsvorrichtung (5) aufweist, wobei die lichtemittierenden Dioden so angeordnet sind, dass sie die Reflexionsvorrichtung umgeben, derart, dass die Reflexionsvorrichtung von den lichtemittierenden Dioden ausgegebenes Licht relativ zu der Längsachse des Körpers (1) nach außen reflektiert.

7. Säule nach Anspruch 6, **dadurch gekennzeichnet, dass** die Reflexionsvorrichtung (5) einen chromplattierten Kegel aufweist.

8. Säule nach einem der vorhergehenden Ansprüche, **dadurch gekennzeichnet, dass** das Gehäuse (12) aus Plastik besteht.

9. Säule nach einem der vorhergehenden Ansprüche, **dadurch gekennzeichnet, dass** der Körper röhrenförmig ist.

10. Säule nach einem der vorhergehenden Ansprüche, **dadurch gekennzeichnet, dass** die programmierbare Steuereinheit mit einer Funkfrequenz-Kommunikationsvorrichtung (302) verbunden ist, um eine Fernsteuerung des Betriebs der Säule und/oder eine Fernprogrammierung der Steuereinheit (300) zu ermöglichen.

11. Säule nach einem der vorhergehenden Ansprüche, **dadurch gekennzeichnet, dass** das photovoltaische Element (4) ein amorpher Sonnenkollektor ist.

12. Säule nach einem der vorhergehenden Ansprüche, in vertikaler Anordnung.

13. Säule nach einem der vorhergehenden Ansprüche, **dadurch gekennzeichnet, dass** das Gehäuse leckdicht ist.

## Revendications

1. Poteau de signalisation lumineuse, comprenant:
un corps (1) avec une première extrémité (1A) et une seconde extrémité (1B);
des moyens de génération de lumière (2) associés audit corps;
au moins un circuit de puissance (3) pour lesdits moyens générateurs de lumière, le circuit de puissance comportant au moins un dispositif d'accumulation d'énergie électrique (31) pour fournir l'énergie électrique auxdits moyens générateurs de lumière;
au moins un élément photovoltaïque (4) associé audit circuit de puissance (3) pour fournir de l'énergie électrique audit, au moins un, dispositif d'accumulation d'énergie électrique, pour charger ledit dispositif d'accumulation d'énergie électrique;
où
l'élément photovoltaïque (4) comprend un panneau solaire situé dans une position entre la première extrémité (1A) et la seconde extrémité (1B) du corps (1), ledit panneau solaire s'étendant autour dudit corps sur un angle α d'une section transversale dudit corps, α ≥ 200°;
et où
le circuit de puissance comprend un sous-système de charge (32) pour charger le dispositif d'accumulation d'énergie électrique (31), ledit sous-système de charge (32) étant relié à l'élément photovoltaïque (4) et au dispositif d'accumulation d'énergie électrique (31), et les moyens générateurs de lumière (2) se situent à une extrémité (1B) du corps, et ils sont couverts par un couvercle translucide (11) fermant ladite extrémité (1B) du corps;
**caractérisé en ce que** ledit panneau solaire est un panneau solaire flexible;
et **en ce que** ledit sous-système de charge (32) comprend un régulateur de tension (321);
et **en ce que** le corps comprend un boîtier (12) ayant au moins une partie translucide, l'élément voltaïque (4) se situant à l'intérieur dudit boîtier (12);
et **en ce que** le circuit de puissance comprend une unité de commande programmable (300);
et **en ce que** l'unité de commande programmable (300) est connectée pour recevoir un signal (300a) de l'élément photovoltaïque (4) et est configuré pour ajuster l'émission de lumière des moyens générateurs de lumière (2) selon ledit signal (300a);
et **en ce que** le régulateur de tension (321) est configuré de façon que lorsque la tension sur le côté de l'élément photovoltaïque (4) est inférieure à un niveau de tension minimum pour charger le dispositif d'accumulation d'énergie électrique (31), le régulateur de tension (321) augmente ladite tension jusqu'à ce qu'elle atteigne le même niveau dudit niveau minimum ou plus grand.

2. Poteau selon la revendication 1, **caractérisé en ce que** α≥270°.

3. Poteau selon la revendication 2, **caractérisé en ce que** α≥330°.

4. Poteau selon la revendication 3, **caractérisé en ce que** α=360°.

5. Poteau selon la revendication 4, **caractérisé en ce que** les moyens de génération de lumière (2) comprennent une pluralité de diodes émettrices de lumière.

6. Poteau selon la revendication 5, **caractérisé en ce que** les moyens de génération de lumière (2) se situent à une extrémité (1B) du corps, ladite extrémité comprenant en outre un dispositif de réflexion sensiblement en forme de cône (5), les diodes émettrices de lumière étant situées de façon qu'elles entourent ledit dispositif de réflexion de telle sorte que ledit dispositif de réflexion réfléchit la lumière émise par les diodes émettrices de lumière vers l'extérieur relativement à l'axe longitudinal du corps (1).

7. Poteau selon la revendication 6, **caractérisé en ce que** ledit dispositif de réflexion (5) comprend un cône plaqué chrome.

8. Poteau selon l'une quelconque des revendications précédentes, **caractérisé en ce que** ledit boîtier (12) est réalisé en plastique.

9. Poteau selon l'une quelconque des revendications précédentes, **caractérisé en ce que** le corps a une forme tubulaire.

10. Poteau selon l'une quelconque des revendications précédentes, **caractérisé en ce que** l'unité de commande programmable est associée à des moyens de communication radio-fréquence (302) pour permettre une commande à distance du fonctionnement du poteau et/ou une reprogrammation à distance de l'unité de commande (300).

11. Poteau selon l'une quelconque des revendications précédentes, **caractérisé en ce que** l'élément photovoltaïque (4) est un panneau solaire amorphe.

12. Poteau selon l'une quelconque des revendications précédentes, agencé verticalement.

13. Poteau selon l'une quelconque des revendications précédentes, **caractérisé en ce que** le boîtier est étanche aux fuites.
